# EUROPEAN PATENT SPECIFICATION

(11) **EP 3 864 593 B1**
(45) Date of publication and mention of the grant of the patent: **15.10.2025**
(21) Application number: 19880393.4
(22) Date of filing: 30.10.2019
(51) Int. Cl.: G06Q 10/06, G07C 3/00, E02F 9/20, G06Q 50/08, G07C 5/00

(54) **PROJECT MANAGEMENT SYSTEMS AND METHODS INCORPORATING PROXIMITY-BASED ASSOCIATION**
PROJEKTVERWALTUNGSSYSTEME UND VERFAHREN MIT ANNÄHERUNGSBASIERTER ASSOZIATION
SYSTÈMES ET PROCÉDÉS DE GESTION DE PROJET INCORPORANT UNE ASSOCIATION BASÉE SUR LA PROXIMITÉ

(30) Priority: 01.11.2018 US 201862754138 P
(43) Date of publication of application: 18.08.2021
(73) Proprietor: Finning International Inc., Vancouver BC V5T 0HS (CA)
(72) Inventor: SARKARIA, Sarbjit, Vancouver, British Columbia V5T 0H8 (CA); WILLMS, Jordan, Vancouver, British Columbia V5T 0H8 (CA); BLAKE, Anthony, Vancouver, British Columbia V5T 0H8 (CA)
(74) Representative: Page White Farrer
(86) International application number: PCT/CA2019/051540
(87) International publication number: WO 2020/087171

(56) References cited:
- WO-A1-2016/115499
- US-A1- 2008 084 333
- US-A1- 2016 063 407
- US-A1- 2018 044 888
- US-B1- 6 611 755
- US-B1- 6 611 755
- US-B2- 10 024 710
- US-B2- 10 024 710
- US-B2- 8 626 541
- GEROLD KLOOS ; JOSE E. GUIVANT ; EDUARDO M. NEBOT ; FAVIO MASSON: "Range Based Localisation Using RF and the Application to Mining Safety", INTELLIGENT ROBOTS AND SYSTEMS, 2006 IEEE/RSJ INTERNATIONAL CONFERENCE ON, 9 October 2006 (2006-10-09), Beijing, China, pages 1304 - 1311, XP031006260, DOI: 10.1109/IROS.2006.281894

## Description

### TECHNICAL FIELD

This present disclosure relates generally to project management systems and methods for managing large construction and civil engineering projects.

### RELATED APPLICATIONS

This application claims priority from United States Provisional Patent Application No. 62/754,138 filed November 1 , 2018 entitled "Project Management Systems and Methods Incorporating Proximity-Based Association". For the purposes of the United States, this application claims the benefit under 35 USC §119 of United States Provisional Patent Application No. 62/754,138 filed November 1 , 2018 entitled "Project Management Systems and Methods Incorporating Proximity- Based Association", which is incorporated herein by reference in its entirety.

### BACKGROUND

Infrastructure construction and civil engineering projects typically involve significant earthmoving and earthworks operations. These operations require coordination of the activities of multiple independent machines, such as loaders (e.g. excavators, wheel loaders, etc.), haulers (e.g. haul trucks or dump trucks), construction tractors, and the like. For example, the excavator and the dump trucks need to collaborate to move material from one location to another. The excavator digs into the material, fills a bucket and loads the bucket of material into a waiting dump truck. Once full, the truck transports the material to its destination point where it is dumped or off-loaded. If there is only one truck being used to haul material, the excavator would need to sit idle while waiting for the truck to return. If, on the other hand, there are too many trucks, then trucks would be sitting idle, waiting in line to be filled with material from an excavator. There is a need for systems and methods for improving or optimizing the productivity of multiple independent machines used in earthmoving and earthworks operations.

Because earthworks contractors and customers generally pay by the ton of material moved and may have requirements for cut/fill balancing (e.g. material removed from hills is used to fill in valleys), it is desirable to track the movement of materials. In general, however, tracking material movement is difficult when there are multiple separate machines collaborating for the earthmoving and earthworks operations. While information concerning a machine's haul and cycle times can be obtained from data provided by load sensors and other on-board digital systems, the limitations of using disparate data sets originating from separate machines make it difficult to determine and keep a record of what material was loaded by what operator, what truck it was loaded into, and where the material was ultimately dumped. As such, there is a lack of clear oversight over mass hauling and payload activities by a plurality of separate but collaborating machines. Reference is made to US 2016/0063407. This application relates generally to performance analysis, and specifically to using location and movement analysis to compute productivity metrics for collaborative tasks. This application describes analysing data received from sensors for a loader and a hauler for the purpose for determining whether the loader and hauler are simultaneously performing a complementary task.
Reference is also made to US 6611755 which describes a vehicle fleet management information system which identifies location and direction of movement of each vehicle in a fleet in real-time and automatically reports such information, as well as status of pre-determined events in which the vehicle is engaged directly to a fleet manager. The document describes reporting on the status of a ready-mix concrete truck, by monitoring the location of the truck and using data collected from sensors on the truck to detect events such as arrival of truck at its designated concrete site, loading at the plant site, departing from the plant site, and arrival at its designated job site.
Notwithstanding these disclosures, there remains a need for systems and methods which address or ameliorate one or more of the challenges noted above, including by providing improved methods for tracking material movement and methods for managing, coordinating, and controlling independent machines used in earthmoving and earthworks operations.

### SUMMARY OF THE DISCLOSURE

In general, the present specification describes systems and methods for management of a fleet of machines and/or systems and methods for tracking material movement by a fleet of machines. These systems and methods enable the association of different collaborating machines and enable materials movement tracking through the correlation of work cycles and payloads of these machines.

An aspect of the invention relates to a method for management of a fleet of machines operating in a construction and/or civil engineering project. The method comprises receiving a first set of telematics data from a first machine, receiving a second set of telematics data from a second machine, and determining whether there is positional and temporal proximity between the first and second machines based at least in part on an analysis of the first and second sets of telematics data. Receiving the first and second sets of telematics data comprises receiving telematics data at regular intervals from each of the first and second machines.

Positional and temporal proximity between the first and second machines is identified when the first machine is within a predetermined maximum distance of the second machine for at least a predetermined minimum duration. In some embodiments, the maximum distance is a configurable distance between 2 and 20 meters and the minimum duration is a configurable duration between 30 seconds and 120 seconds.

If it is determined that there is positional and temporal proximity, work cycle data is received from each of the first and second machines and is correlated, and if there is a correlation in the work cycle data, the first machine is associated with the second machine, and the association is applied to support mass haul monitoring for the fleet of machines.

If there is a correlation in the work cycle data, payload data is received from each of the first and second machines. A first part of the payload data for the first machine is correlated with a first part of the payload data for the second machine. A second part of
the payload data for the second machine is derived from a second part of the payload data for the first machine. The results of the payload correlation and derivation are applied to track movement of a material between the first and second machines. The first part of the payload data may comprise weight and/or mass. The second part of the payload data may comprise material type.

Applying the association to the fleet of machines may comprise analysing the association data for the fleet of machines and the material movement tracking, and providing, as output, a project plan comprising decisions as to which machines should be deployed and where they should be sent to. This can help increase the productivity of the fleet of machines and decrease the machines' idle periods. Commands are generated based on the project plan and transmitted to each of the machines.

In particular embodiments, the first machine comprises a loader and the first set of telematics data comprises: the location of the machine, the action being carried out by the machine, such as (a) loading material into a hauler, or (b) rearranging material in-location (e.g. scraping, piling, cleaning-up), the weight of the load being lifted by a bucket, the material type being handled, and time stamps associated with each of the above. The second machine comprises a hauler and the second set of telematics data comprises: the location of the machine, the action being carried out by the machine, such as (a) hauler is being loaded into, or (b) hauler is travelling loaded, waiting to dump, dumping, travelling empty, waiting to load and not-in operation, the weight of the load being carried by the hauler, and the time stamps associated with each of the above.

Another aspect of the invention relates to a system for performing one or more of the above-described methods of management of a fleet of machines in a construction and/or civil engineering project.

Additional aspects of the present invention will be apparent in view of the description which follows.

### BRIEF DESCRIPTION OF THE DRAWINGS

Features and advantages of the embodiments of the present invention will become apparent from the following detailed description, taken in with reference to the appended drawings in which:
FIG. 1 schematically illustrates a project environment with a back-end system for managing an earthmoving operation according to one embodiment.
FIG. 2 schematically illustrates the back-end system shown in FIG. 1.
FIG. 3 is a flowchart of an example method that may be performed by the back-end system shown in FIGS. 1 and 2.

### DETAILED DESCRIPTION

The description which follows, and the embodiments described therein, are provided by way of illustration of examples of particular embodiments of the principles of the present invention. These examples are provided for the purposes of explanation, and not limitation, of those principles and of the invention.

The disclosure herein relates to project management systems and methods for tracking material movement by multiple independent earthmoving machines. Particular embodiments provide systems and methods for correlating work cycles and analysing payloads of collaborating machines and identifying associations between collaborating machines, through an automated process that is based at least in part on positional and temporal proximity. The identification of associated machines and results of the correlation can be used for productivity analysis. Systems and methods described herein have particular applications for improving and/or optimizing the productivity of a fleet of earthmoving machines and other types of collaborating machines in a variety of industries.

The productivity of individual machines can be measured by equipping each machine with sensors and other on-board digital systems which measure or identify the machine's position, work cycles, and payload (e.g. weight). While it may be possible to ascertain, from this information, haulers that have experienced poor hauling times and loading times, it would not be possible to ascertain which hauler accepted material from a particular loader (e.g. excavator) from this information alone. There is nothing in the available data from the individual machines that would explicitly indicate an association between a set of collaborating or interacting machines (i.e. the excavator and the hauler that is being filled by the excavator, in the foregoing example).

Conventional solutions for assessing productivity track an individual loader's loading weight and activity, or an individual hauler's activity and payload, without correlating any data between machines. The loader and haulers are treated as standalone systems with non-integrated on-board systems. The telematics data obtained through the on-board systems of different machines may need to be viewed using different devices or screens. This hinders the coordination of data, and results in a lack of actionable insights or leading indicators for performance. As a result, there is no clear oversight over mass hauling and payload activities.

In embodiments of the invention described herein, an association between collaborating machines is generated through an automated process. The automated process involves evaluating the proximity between a set of machines based on telematics data obtained from the machines, and correlating work cycles and payloads of the machines. The association between machines and results of the correlation can be used for productivity analysis. In particular, it can be used to determine and maintain a record of what material was loaded by what excavator, what truck the material was loaded into, and where the material was ultimately dumped, etc. In addition, it can enable the identification of poor performance between sets of cooperating loaders and haulers. This information can be applied to enhance the productivity of collaborating machines, and facilitate training and coaching opportunities for equipment operators.

In particular embodiments, an association between cooperating machines is derived at least in part from positional information and temporal information. In the case of machines used for earthmoving, the machines are equipped with on-board Global Positioning System (GPS) devices that provide the position of the machine at regular intervals (e.g. once per minute). This periodic location data may be referred to as GPS "bread crumbs". Each reading for location data may be associated with a time stamp.

To derive the association between two machines comprising a loader and a hauler, data is gathered from each of the machines. Data that is gathered by the loader (e.g. excavator, wheel loader, and the like) may include one or more of the following:
- the location of the machine (e.g. GPS data);
- the action being carried out by the machine, such as (a) loading material into a hauler, or (b) rearranging material in-location (e.g. scraping, piling, cleaning-up), where the distinction between these actions in some embodiments requires operator assistance (e.g. the operator pushes a button or performs some other action indicating to the system that its bucket was loaded into a truck);
- the weight (mass) of the load being lifted by a bucket;
- the material type being handled, wherein in some embodiments the identification of material type requires operator assistance in selecting a material type from a pre-supplied list; and
- time stamps associated with each of the above.

The machine serial number may be passed through with the GPS data and payload data (weight and/or material type). The back-end system may have access to additional data about the machine (such as machine make and model) from other business systems.

In particular embodiments, solutions such as visual processing from video feeds or radio frequency identification (RFID) proximity sensors may be used to determine the action type. For example, when a bucket is in close proximity of a truck for loading material in the bucket onto the truck, RFID data is exchanged, whereas this would not happen if the loader was simply re-arranging a pile of dirt.

Similarly, data that is gathered by the hauler (e.g. dump truck or haul truck, and the like) may include one or more of the following:
- the location of the machine (e.g. GPS data);
- the action being carried out by the machine, such as (a) hauler is being loaded into, or (b) hauler is travelling loaded, waiting to dump, dumping, travelling empty, waiting to load and not-in operation;
- the weight (mass) of the load being carried by the hauler; and
- the time stamps associated with each of the above.

According to certain embodiments, material type is data that is supplied by the operator. This data is provided by the operator of the loader, as it is usually expected that this operator has knowledge about what material(s) they are handling with their machine. On the other hand, it is generally desirable to avoid requiring manual operator input for haulers during operation since it may be distracting to the haul operator (e.g. driver of the dump truck) and/or may require knowledge that is not possessed by the haul operator.

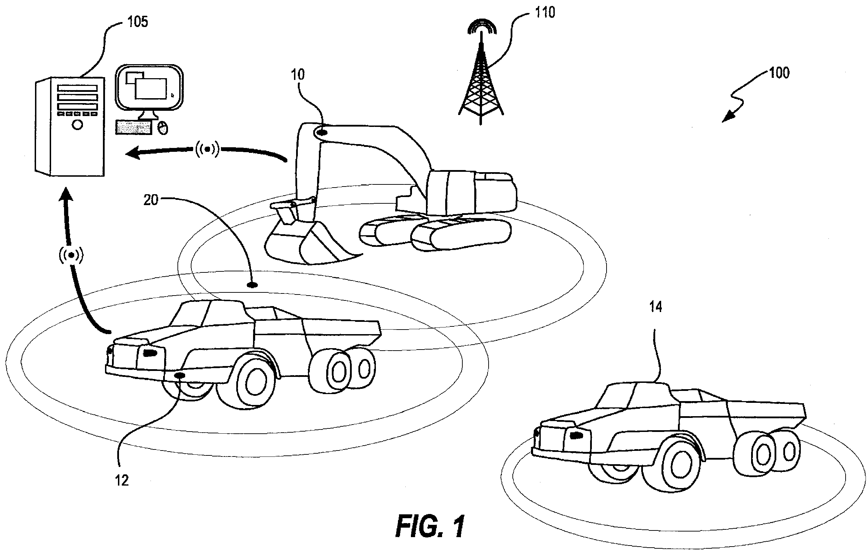

FIG. 1 shows an overall project environment and system **100** for an earthmoving operation carried out by a plurality of machines. Representative earthmoving machines **10, 12** and **14** are shown in FIG. 1. The overall system **100** comprises a back-end system **105** that is operable to manage the machines. The back-end system **105** is configured to receive telematics data from machines **10, 12** and **14** over a communication link (such as a radio communication link facilitated by one or more radio transmission towers **110,** or via satellite communication). Based on such data, the back-end system **105** determines whether any two machines are within close geographic proximity to one another for a predetermined minimum period. For example, for an excavator to be able to load a hauler, the excavator's boom needs to be able to reach and overlap the hauler with a fully loaded bucket. If so, the hauler is determined to be within the excavator's loading zone. In some cases, this would require the hauler to be within a configurable maximum distance x of the excavator for a configurable minimum duration. In one embodiment, for example, the maximum distance x is 7 meters and the minimum duration is 1 minute. If the hauler is within the maximum distance x of the excavator for less than the minimum duration of 1 minute, then this may be indicative of the hauler merely passing close to the excavator without the hauler stopping for a sufficient duration to allow it to be loaded from the excavator. In other embodiments, the maximum distance x may be set at some distance between 2 and 20 meters, and the minimum duration may be set at some duration between 30 seconds and 120 seconds. In still other embodiments, the maximum distance x may be set at some distance between 5 and 15 meters, and the minimum duration may be set at some duration between 30 seconds and 90 seconds.

The location data of each machine may be provided by positioning sensors, such as Global Positioning System (GPS) sensors, on the machine. While it is the distance between the excavator's boom and the hauler's bucket that largely determines whether the two vehicles are capable of cooperating so as to have the excavator load the hauler, the GPS sensors may be positioned on the body of each vehicle at some distance (e.g. a few meters) away from the boom and the bucket, respectively. In addition, the position information obtained through the GPS sensor may be inaccurate by up to a certain extent depending on the conditions (for example, by approximately ±0.5 m, ±1.0 m, ±2.0 m, ±3.0 m, ±4.0 m, ±5.0 m, etc.) As such, the determination of geographic proximity may include an error component or delta associated with the distances used, in order to account for GPS inaccuracies as well as the GPS sensor being located on the body of the vehicle at a distance away from the relevant component that interacts with the other vehicle (the latter consideration being more pronounced for larger vehicles).

Generally, while larger machines require larger time and distance ranges, the time factor may depend on the ratio of the loading bucket to the truck bucket. In some cases a single shovel load can fill a truck in which case the total load time can be in the region of 60 seconds. Loading at a mining operation using a CAT 6060 shovel loading a 793 240 ton truck would require a minimum 90 second duration at a maximum distance of 10 to 12 meters. Loading at a construction site using a Cat 349 Excavator loading a Cat 745 articulated truck would require a minimum 90 second duration at a maximum distance of 10 to 13 meters (i.e. the maximum boom extension).

The specified minimum duration should generally be at least as long as the cadence at which location information is obtained. For example, if location information is retrieved once per minute for a certain machine, then the specific minimum duration cannot be less than one minute, as the determination of temporal proximity would be limited by the frequency of the location data.

Accordingly, any hauler that is within the predetermined maximum distance of the excavator for at least the predetermined minimum duration exhibits both positional and temporal proximity and is likely to be the target of the excavator's loading actions. In this way there is an implicit derived association between the two collaborating machines that could then be further used to correlate work cycle data and correlate and derive payload data for the machines. In the scenario illustrated in FIG. 1, back-end system **105** processes the data received from machines **10, 12** and **14.** Based on data received from machine **10** (an excavator) and machine **12** (a hauler), back-end system **105** identifies a positional and temporal proximity between machines **10, 12** (e.g. machine **10** is within 7 meters from machine **12** for at least a minimum duration of 1 minute). As a result, back-end system **105** generates an association **20** between machines **10, 12.**

The positioning of machines may lead to "phantom" associations in certain situations. In particular embodiments, one or more additional criteria are placed upon the available data to resolve such situations. For example, in the scenario shown in FIG. 1, machine **14** (a hauler) does not have sufficient positional proximity to machine **10** (an excavator) to form an association given that machine **14** is more than the maximum distance away from machine **10.** However, a phantom association may be generated between these machines as machine **14** approaches machine **10,** comes within the maximum distance and stays within that distance for the minimum specified duration. In some embodiments, to ascertain whether machine **14** should be associated with machine 10**,** the work cycle data is analysed and machine **14**'s work cycle data is correlated with machine **10**'s work cycle data. There is a correlation between the machines' work cycle data when machine **14'**s work cycle data indicates that it is being loaded in the same period (work cycle) as the machine **10'**s work cycle data indicates that it is loading. If there are multiple haulers within the loading zone of a loader (i.e. the haulers are located within the maximum distance from the loader), generally only one hauler is loaded at a time. The hauler with the work cycle indicating that it is being loaded (e.g. its sensors are detecting an increase of weight carried by the suspension), is selected as the one associated with the loader.

In particular embodiments, if the possibility of a phantom association has been eliminated and an actual (non-phantom) association is generated between two collaborating machines, their payload data can be correlated and/or derived. In regard to payload data, there are primarily two sets of data that may be correlated or derived, namely, weight (mass, typically measured in tonnes) which is correlated between the loader and the hauler, and material type which is in inherited from the loader to the hauler.

Payload weight may be correlated to perform a calibration check of the on-board sensors. For example, if the loader data indicates it loaded a total of 50 tonnes into a truck and the corresponding truck data indicates it received 40 tonnes, then there is a 20% discrepancy and action needs to be taken to correct the situation to within an acceptable error margin. Often this accuracy is useful for billing and other purposes. For example, earthmoving requirements are often specified by volume rather than weight. This is because the planning of cut/fill scenarios is based upon volumetric measures, which are observable (whereas masses are not). Thus, accurate weight readings and identification of material type may help with accurately determining volumes of material moved.

Derivation of material type data can be used to facilitate tracking of material movement quantities from its source to its destination in earthmoving operations. Because the hauler data cannot generally be used to identify what material type is being moved by the hauler, material type data for the hauler can be derived from the loader data based on the temporal and positional association between the loader and the hauler. Material type can be inherited data since the hauler data indicates where the material was moved from and where it was moved to.

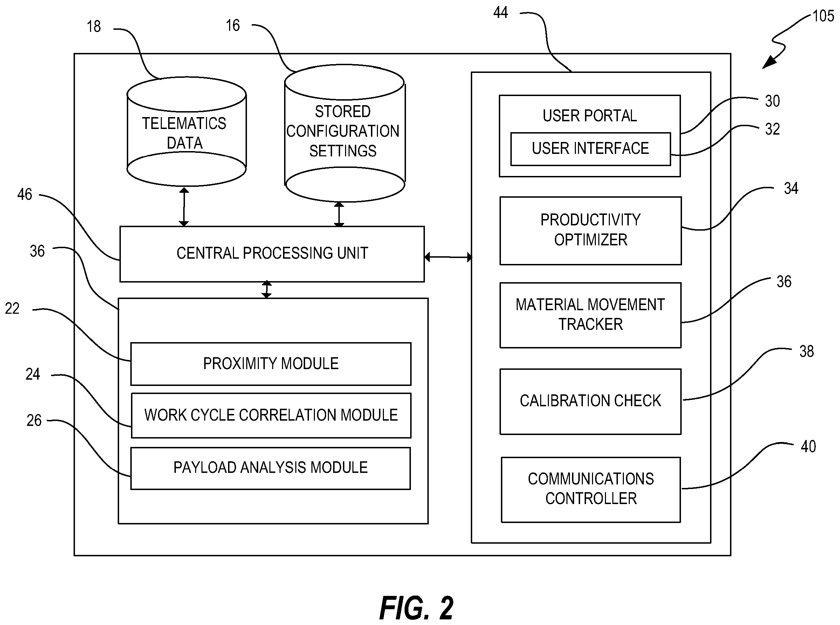

FIG. 2 illustrates a back-end system **105** according to one example embodiment that may be used for project management in the overall system and environment **100** of FIG. 1. Back-end system **105** comprises a data storage **18** for storing telematics data obtained from the various machines that are involved in a large construction or civil engineering project (e.g. such as an earthmoving operation). Back-end system **105** also comprises a data storage **16** for storing settings used for configuring the back-end system **105.** The configuration settings may comprise, for example, maximum distance for an assessment of positional proximity, and minimum duration for an assessment of temporal proximity. Two machines must be apart by no more than the maximum distance for at least the minimum duration to be identified as positionally and temporally proximate. Back-end system **105** also comprises program memory **36, 44** and a central processing unit **46** for executing software instructions stored in program memory **36, 44.** Back-end system **105** uses one or more of the telematics data and stored configuration settings as input to the various software functions.

The software functionality of back-end system **105** may be organized as modules, as illustrated in FIG. 2. Each of these modules provides instructions, which when executed by central processing unit **46,** implement a particular method or portion of a method used for project management of a fleet of collaborating or interacting machines. For example, as seen in FIG. 2:
- proximity module **22** can be used to implement a method of identifying a positional and temporal proximity of two machines, and identifying a potential association between machines based on their positional and temporal proximity;
- a work cycle correlation module **24** can be used to correlate between work cycles of potentially associated machines, which can be used to eliminate phantom associations, as described elsewhere herein, and identify actual or non-phantom associations between two machines;
- a payload analysis module **26** can be used to correlate and/or derive payload data between the loader and hauler (e.g. mass or weight, which is correlated, and material type, which is derived or inherited from the loader);
- material movement tracker **36** can take the results of payload analysis module **26** to track quantities of material movement from the source to its destination through its transfer from one machine to the next;
- productivity optimizer **34** can be used to analyse the association data generated by work cycle correlation module **24,** the material movement data generated by material movement tracker **36,** and/or the correlation and derivation results of payload analysis module **26,** and provide, as output, a project plan comprising decisions as to which machines should be deployed and where they should be sent to, to increase productivity of the construction or civil engineering project;
- calibration check **38** can take the results of payload analysis module **26** (with regard to correlation of mass or weight of the material) to check the calibration of the on-board sensors of the relevant machines; and
- communications controller **40** can be used to receive the output project plan of productivity optimizer **34,** generate instructions based on these outputs, and transmit them to the machines to implement the project plan.

In addition, the FIG. 2 back-end system **105** may comprise a user portal module **30** providing a user interface **32** for handling the interactions of an operator with the back-end system **105.** User interface **32** is configured to allow the operator to view the results of the work cycle correlation, payload analysis and material movement tracker modules, and the recommendations or project plan provided by the productivity optimization. User interface **32** may also allow the operator to input data and perform tasks such as change the configuration settings and manually select machines for explicit association (as described below).

In certain embodiments, instead of an implicit association as described above, an explicit association between correlating machines may be generated by manual data entry in either machine (loader or hauler). The manual data entry involves explicitly tagging one set of data with the machine identifier of the other cooperating machine. Data correlation and/or inheritance can then take place based on that explicit manual association. For example, an excavator's on-board systems may provide the means for the excavator operator to enter a truck identifier into its work load and payload system(s), corresponding to the truck that the excavator is loading. This truck identifier is then tagged against the data received from that excavator. If the same truck identifier is associated with the data received from a truck, then that truck identifier can be used as the explicit association link to the excavator. However, this method relies on operator input and intervention, which may be subject to operator error or distraction.

In some embodiments, the on-board systems on both machines may be more sophisticated and may be configured to facilitate the exchange of machine identity between the machines (e.g. by means of local radio communication or other form of communication). The payload and productivity systems are configured to access this machine identity data, so that the association is generated explicitly by the machines exchanging their identity data.

Because the positional and temporal proximity mechanisms are independent of one another, occasionally situations may occur that lead to incorrect associations. A wheel loader scraping and loading top soil into one waiting truck and underlying gravel into a second waiting truck within the same excavator load cycle may lead to incorrect associations. For example, unless the operator of the loader indicates the end of one cycle with material type A and the start of the next cycle with material type B, there would be no way of knowing that the material type had changed. While two separate associations would be detected by execution of the temporal/proximity method, an incorrect material type would be inherited or derived by the second association unless the material type is changed. When such situations are detected (e.g. by the operator of the loader or the operator of the hauler), it may be necessary to mandate that the loader/hauler association is entered manually and explicitly by the operator rather than using an automated proximity-based method. If there is additional data available, such as only certain material types are dumped at certain drop locations, then such a "slipped material type change" could potentially be detected.

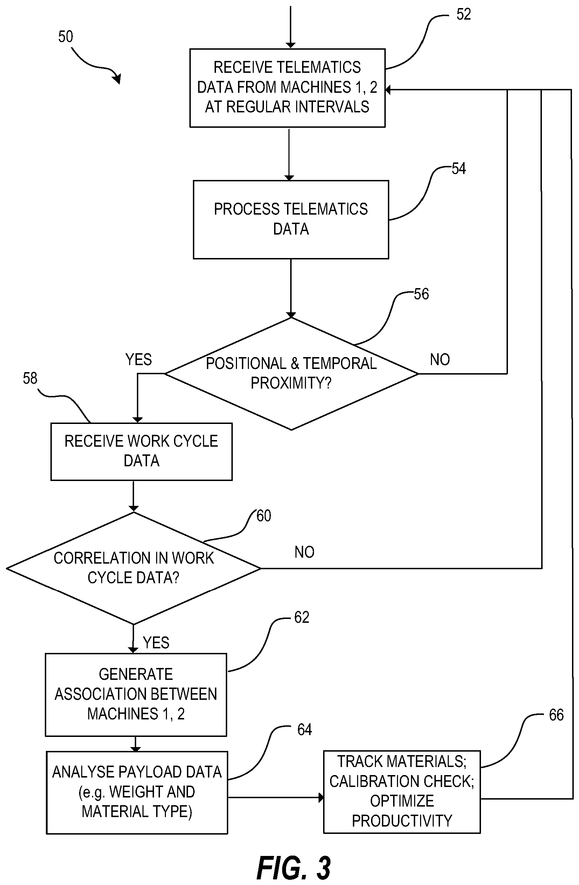

FIG. 3 illustrates a method **50** that may be performed by the back-end system **105** shown in FIGS. 1 and 2. Method **50** begins at block **52** by receiving telematics data from a first machine and a second machine at regular time intervals. At block **54,** the telematics data is processed. Processing of the telematics data may involve determining, based on the machine's location data, a distance between the machines for each time at which the data is sampled. If the distance remains equal to or less than a configurable maximum value for at least a configurable minimum duration, then the two machines are identified to have positional and temporal proximity at block **56,** and method **50** proceeds to block **58** by receiving work cycle data. Otherwise, no positional and temporal proximity is established, and method **50** returns to block **52** by continuing to receive telematics data for the machines.

Where a positional and temporal proximity is established for the machines, the work cycle data that is received at block **58** may be analysed at block **60** to determine if there is a correlation in the work cycle data, indicating that the two machines are collaborating. If the work cycle data indicates that one of the machines is being loaded in the same period (work cycle) as the other machine's work cycle data indicates that it is loading, then there is a correlation identified at block **60,** and method **50** proceeds by generating an association between the machines at block **62.** On the other hand, if no correlation in work cycle data is observed at block **60,** then method **50** returns to block **52** by continuing to receive telematics data for the machines.

Once an association has been generated at block **62,** method **50** proceeds to block **64** where payload data (e.g. weight and material type) are analysed. Payload weight may be correlated between the two machines. For example, the weight of material moved from the loader (as detected by the loader's on-board sensors) is correlated with the weight of material accepted by the hauler (as detected by the hauler's on-board sensors). This correlation may be used to check the calibration of the on-board sensors of the relevant machines at block **66** of method **50.** In addition, at block **64,** the type of the material being loaded can be inherited from the loader to the hauler. This information can then be used for mass haul tracking and/or productivity optimization at block **66.**

One of the key advantages for generating an association between a collaborating set of a loader and a hauler is that the association enables the hauler to inherit the material type from its associated loader, without requiring hauler operator intervention. Having the hauler operator manually identify the particular loader from which it is accepting material is not ideal, since the operator needs to concentrate on driving and operating their machine. However, the methods described herein permit the inheritance of material type between collaborating machines, which may be used to support mass haul monitoring.

When creating transport corridors (e.g. for trains or highways), 3D design of the corridor is carried out to meet the needs of the corridor itself (e.g. tightest curves allowed, maximum incline or decline allowed, maximum surface slope allowed, etc. - e.g. trains travelling in excess of 400km/h cannot go around tight corners at this speed). The 3D design also attempts to optimally utilize material along the corridor by using excess material from a hill (cut site) to fill in dips due to valleys (fill sites). It is important to be able to discriminate between different types of material for optimization, since different material types will have different processes and uses. For example, top soil needs to be initially removed, stock-piled and then re-used as side cover for embankments. Some removed material may need to be dumped in off-corridor dump sites (e.g. bog mud may not make a good filler material). Some material may need processing (e.g. crushing, blending) before being re-used. Some material may be considered as hazardous (e.g. oil contaminated material) and needs to be dumped at specially prepared sites. This optimal usage of material requires mass haul monitoring. In particular, the hauler cycle data (enhanced with inherited material type data) can be used to track all material movements from cut sites to fill, processing or dump sites. This actual material movement can then be compared to target material movements (generated by the mass haul analysis and planning tools) to determine progress and deviations from plans.

Exemplary applications for the above-described technology include material movement applications in heavy or large scale construction, agriculture, forestry, mining, government, industrial and waste, quarry and aggregates.

Prior to the use of a proximity-based method to associate, and hence correlate, disparate data sets originating from separate but collaborating machines, there would be a need for manual intervention in the work cycle to establish machine-to-machine association. Otherwise, there is reduced utility value of the data sets having no common association data. For example, where an excavator and a hauler are manufactured by different companies, their out-of-the-box on-board systems would produce telematics data that contained no common data from which an association can be derived. The application of this invention facilitates the enhanced use of the disparate data sets by implicit association between the machines based on positional and temporal proximity.

The examples and corresponding diagrams used herein are for illustrative purposes only. Different configurations and terminology can be used without departing from the principles expressed herein.

Although the invention has been described with reference to certain specific embodiments, various modifications thereof will be apparent to those skilled in the art without departing from the scope of the invention. The scope of the claims should not be limited by the illustrative embodiments set forth in the examples, but should be given the broadest interpretation consistent with the description as a whole.

## Claims

1. A system (105) for management of a fleet of machines operating in a construction or civil engineering project, the system (105) comprising a control and processing unit (46) configured to:
receive a first set of telematics data from a first machine (10);
receive a second set of telematics data from a second machine (12); and
determine whether there is positional and temporal proximity between the first and second machines (10, 12) based at least in part on an analysis of the first and second sets of telematics data, wherein the control and processing unit (46) is configured to receive the first and second sets of telematics data by receiving the telematics data at intervals from each of the first and second machines (10, 12),
wherein the control and processing unit (46) is configured to identify positional and temporal proximity between the first and second machines (10, 12) when the first machine (10) is within a predetermined maximum distance of the second machine (12) for at least a predetermined minimum duration, wherein the maximum distance is preferably a configurable distance between 2 and 20 meters and the minimum duration is preferably a configurable duration between 30 seconds and 120 seconds,
wherein, if it is determined that there is positional and temporal proximity, the control and processing unit (46) is configured to:
receive work cycle data from each of the first and second machines (10, 12); and
correlate the work cycle data of the first machine (10) with the work cycle data of the second machine (12), and if there is a correlation in the work cycle data:
associate the first machine (10) with the second machine (12);
apply the association to support mass haul monitoring for a fleet of machines, the fleet of machines comprising at least the first and second machines (10, 12);
receive payload data from each of the first and second machines (10, 12);
correlate a first part of the payload data of the first machine (10) with a first part of the payload data of the second machine (12) and derive a second part of the payload data of the second machine (12) from a second part of the payload data of the first machine (10), wherein the first part of the payload data preferably comprises weight and/or mass, and the second part of the payload data preferably comprises material type; and
apply the results of the payload correlation and derivation to track quantities of a material moved by the first and second machines (10, 12).

2. The system (105) of claim 1, wherein the control and processing unit (46) is configured to apply the association by analysing the association data for the fleet of machines and the material movement tracking, and providing, as output, a project plan comprising decisions as to which machines should be deployed and where they should be sent to, to increase the productivity of the fleet of machines, and wherein the control and processing unit (46) is preferably configured to generate commands based on the project plan and transmit the commands to each of the machines.

3. The system (105) of either one of claim 1 or 2, wherein the first machine (10) comprises a loader and the first set of telematics data comprises:
• the location of the machine;
• the action being carried out by the machine, such as (a) loading material into a hauler, or (b) rearranging material in-location (e.g. scraping, piling, cleaning-up);
• the weight of the load being lifted by a bucket;
• the material type being handled; and
• time stamps associated with each of the above.

4. The system (105) of any one of claims 1 to 3, wherein the second machine (12) comprises a hauler and the second set of telematics data comprises:
• the location of the machine;
• the action being carried out by the machine, such as (a) hauler is being loaded into, or (b) hauler is travelling loaded, waiting to dump, dumping, travelling empty, waiting to load and not-in operation;
• the weight of the load being carried by the hauler; and
• the time stamps associated with each of the above.

5. A method for management of a fleet of machines operating in a construction or civil engineering project, the method comprising:
receiving a first set of telematics data from a first machine (10);
receiving a second set of telematics data from a second machine (12); and
determining whether there is positional and temporal proximity between the first and second machines (10, 12) based at least in part on an analysis of the first and second sets of telematics data; wherein receiving the first and second sets of telematics data comprises receiving telematics data at intervals from each of the first and second machines (10, 12);
wherein positional and temporal proximity between the first and second machines (10, 12) is identified when the first machine (10) is within a predetermined maximum distance of the second machine (12) for at least a predetermined minimum duration, wherein the maximum distance is preferably a configurable distance between 2 and 20 meters and the minimum duration is preferably a configurable duration between 30 seconds and 120 seconds;
wherein, if it is determined that there is positional and temporal proximity, the method further comprises:
receiving work cycle data from each of the first and second machines (10, 12); and
correlating the work cycle data of the first machine (10) with the work cycle data of the second machine (12) , and if there is a correlation in the work cycle data:
associating the first machine (10) with the second machine (12); and
applying the association to support mass haul monitoring for the fleet of machines, the fleet of machines comprising at least the first and second machines (10, 12);
receiving payload data from each of the first and second machines (10, 12);
correlating at least a first part of the payload data of the first machine (10) with at least a first part of payload data of the second machine (12), and deriving a second part of the payload data of the second machine (12) from a second part of the payload data of the first machine (10), wherein the first part of the payload data preferably comprises weight and/or mass, and the second part of the payload data preferably comprises material type; and
applying the results of the payload correlation and derivation to track movement of quantities of a material by the first and second machines (10, 12).

6. The method of claim 5, wherein applying the association comprises:
analysing the association data for the fleet of machines and the material movement tracking, and providing, as output, a project plan comprising decisions as to which machines should be deployed and where they should be sent to, to increase the productivity of the fleet of machines, and
preferably generating commands based on the project plan and transmitting the commands to each of the machines.

7. The method of either one of claim 5 or 6, wherein the first machine (10) comprises a loader and the first set of telematics data comprises:
• the location of the machine;
• the action being carried out by the machine, such as (a) loading material into a hauler, or (b) rearranging material in-location (e.g. scraping, piling, cleaning-up);
• the weight of the load being lifted by a bucket;
• the material type being handled; and
• time stamps associated with each of the above.

8. The method of any one of claims 5 to 7, wherein the second machine (12) comprises a hauler and the second set of telematics data comprises:
• the location of the machine;
• the action being carried out by the machine, such as (a) hauler is being loaded into, or (b) hauler is travelling loaded, waiting to dump, dumping, travelling empty, waiting to load and not-in operation;
• the weight of the load being carried by the hauler; and
• the time stamps associated with each of the above.

## Patentansprüche

1. System (105) zur Verwaltung einer Flotte von Maschinen, die in einem Bau- oder Tiefbauprojekt eingesetzt werden, das System (105) umfassend eine Steuerungs- und Verarbeitungseinheit (46), die konfiguriert ist zum:
Empfangen eines ersten Satzes von Telematikdaten von einer ersten Maschine (10);
Empfangen eines zweiten Satzes von Telematikdaten von einer zweiten Maschine (12); und
Bestimmen, ob eine räumliche und zeitliche Nähe zwischen der ersten und der zweiten Maschine (10, 12) besteht, mindestens basierend auf einer Analyse des ersten und des zweiten Satzes von Telematikdaten, wobei die Steuer- und Verarbeitungseinheit (46) konfiguriert ist, um den ersten und den zweiten Satz von Telematikdaten zu empfangen, indem sie die Telematikdaten in Intervallen von jeder der ersten und der zweiten Maschine (10, 12) empfängt,
wobei die Steuer- und Verarbeitungseinheit (46) konfiguriert ist, um die räumliche und zeitliche Nähe zwischen der ersten und der zweiten Maschine (10, 12) zu identifizieren, wenn sich die erste Maschine (10) für mindestens eine vorbestimmte Mindestdauer innerhalb einer vorbestimmten maximalen Entfernung von der zweiten Maschine (12) befindet, wobei die maximale Entfernung vorzugsweise eine konfigurierbare Entfernung zwischen 2 und 20 Metern ist und die minimale Dauer vorzugsweise eine konfigurierbare Dauer zwischen 30 Sekunden und 120 Sekunden ist,
wobei, wenn bestimmt wird, dass eine räumliche und zeitliche Nähe besteht, die Steuereinheit und Verarbeitungseinheit (46) konfiguriert ist zum:
Empfangen von Arbeitszyklusdaten von jeder der ersten und zweiten Maschinen (10, 12); und
Korrelieren der Arbeitszyklusdaten der ersten Maschine (10) mit den Arbeitszyklusdaten der zweiten Maschine (12) und, falls eine Korrelation in den Arbeitszyklusdaten vorliegt:
Verbinden der ersten Maschine (10) mit der zweiten Maschine (12);
Anwenden der Zuordnung zur Unterstützung der Massenbewegungsüberwachung für eine Maschinenflotte, wobei die Maschinenflotte mindestens die erste und die zweite Maschine (10, 12) umfasst;
Empfangen von Nutzdaten von jeder der ersten und zweiten Maschinen (10, 12);
Korrelieren eines ersten Teils der Nutzdaten der ersten Maschine (10) mit einem ersten Teil der Nutzdaten der zweiten Maschine (12) und Ableiten eines zweiten Teils der Nutzdaten der zweiten Maschine (12) aus einem zweiten Teil der Nutzdaten der ersten Maschine (10), wobei der erste Teil der Nutzdaten vorzugsweise Gewicht und/oder Masse umfasst und der zweite Teil der Nutzdaten vorzugsweise den Materialtyp umfasst; und
Anwenden der Ergebnisse der Nutzlastkorrelation und Ableitung, um die Mengen eines von der ersten und zweiten Maschine (10, 12) bewegten Materials zu verfolgen.

2. System (105) nach Anspruch 1, wobei die Steuerungs- und Verarbeitungseinheit (46) konfiguriert ist, um die Zuordnung durch Analyse der Zuordnungsdaten für die Maschinenflotte und der Materialbewegungsverfolgung anzuwenden, und als Ausgabe einen Projektplan bereitstellen, der Entscheidungen darüber umfasst, welche Maschinen eingesetzt und wohin sie geschickt werden sollen, um die Produktivität der Maschinenflotte zu steigern, und wobei die Steuerungs- und Verarbeitungseinheit (46) vorzugsweise konfiguriert ist, um Befehle basierend auf dem Projektplan zu erzeugen und die Befehle an jede der Maschinen zu übertragen.

3. System (105) nach Anspruch 1 oder 2, wobei die erste Maschine (10) einen Lader umfasst und der erste Satz von Telematikdaten Folgendes umfasst:
• den Standort der Maschine;
• die von der Maschine ausgeführte Aktion, wie beispielsweise (a) Laden von Material in einen Transporter oder (b) Umschichten von Material an Ort und Stelle (z. B. Schaben, Aufschichten, Aufräumen);
• das Gewicht der Last, die von einer Schaufel angehoben wird;
• die Art des zu verarbeitenden Materials; und
• Zeitstempel, die mit jedem der vorstehenden Punkte verbunden sind.

4. System (105) nach einem der Ansprüche 1 bis 3, wobei die zweite Maschine (12) einen Transporter umfasst und der zweite Satz von Telematikdaten Folgendes umfasst:
• den Standort der Maschine;
• die von der Maschine ausgeführte Aktion wie beispielsweise (a) der Transporter wird beladen, (b) der Transporter fährt beladen, wartet auf das Entladen, entlädt, fährt leer, wartet auf die Beladung oder ist außer Betrieb;
• das Gewicht der vom Transporter beförderten Ladung; und
• die Zeitstempel, die mit jedem der vorstehenden Punkte verbunden sind.

5. Verfahren zum Management einer Flotte von Maschinen, die in einem Bau- oder Tiefbauprojekt eingesetzt werden, das Verfahren umfassend:
Empfangen eines ersten Satzes von Telematikdaten von einer ersten Maschine (10);
Empfangen eines zweiten Satzes von Telematikdaten von einer zweiten Maschine (12); und
Bestimmen, ob eine räumliche und zeitliche Nähe zwischen der ersten und der zweiten Maschine (10, 12) besteht, mindestens teilweise basierend auf einer Analyse des ersten und des zweiten Satzes von Telematikdaten; wobei das Empfangen des ersten und des zweiten Satzes von Telematikdaten das Empfangen von Telematikdaten in Intervallen von jeder der ersten und der zweiten Maschine (10, 12) umfasst;
wobei die räumliche und zeitliche Nähe zwischen der ersten und der zweiten Maschine (10, 12) festgestellt wird, wenn sich die erste Maschine (10) für mindestens eine vorbestimmte Mindestdauer innerhalb einer vorbestimmten maximalen Entfernung von der zweiten Maschine (12) befindet, wobei die maximale Entfernung vorzugsweise eine konfigurierbare Entfernung zwischen 2 und 20 Metern ist und die Mindestdauer vorzugsweise eine konfigurierbare Dauer zwischen 30 Sekunden und 120 Sekunden ist;
wobei, wenn bestimmt wird, dass eine räumliche und zeitliche Nähe besteht, das Verfahren ferner Folgendes umfasst:
Empfangen von Arbeitszyklusdaten von jeder der ersten und zweiten Maschinen (10, 12); und
Korrelieren der Arbeitszyklusdaten der ersten Maschine (10) mit den Arbeitszyklusdaten der zweiten Maschine (12), und wenn eine Korrelation in den Arbeitszyklusdaten vorliegt:
Verbinden der ersten Maschine (10) mit der zweiten Maschine (12); und
Anwenden der Zuordnung zur Unterstützung der Massenbewegungsüberwachung für die Maschinenflotte, wobei die Maschinenflotte mindestens die erste und die zweite Maschine (10, 12) umfasst;
Empfangen von Nutzdaten von jeder der ersten und zweiten Maschinen (10, 12);
Korrelieren mindestens eines ersten Teils der Nutzdaten der ersten Maschine (10) mit mindestens einem ersten Teil der Nutzdaten der zweiten Maschine (12), und Ableiten eines zweiten Teils der Nutzlastdaten der zweiten Maschine (12) aus einem zweiten Teil der Nutzlastdaten der ersten Maschine (10), wobei der erste Teil der Nutzlastdaten vorzugsweise Gewicht und/oder Masse umfasst und der zweite Teil der Nutzlastdaten vorzugsweise den Materialtyp umfasst; und
Anwenden der Ergebnisse der Nutzlastkorrelation und Ableitung, um die Bewegung von Materialmengen durch die erste und zweite Maschine (10, 12) zu verfolgen.

6. Verfahren nach Anspruch 5, wobei das Anwenden der Zuordnung Folgendes umfasst:
Analysieren der Zuordnungsdaten für die Maschinenflotte und der Materialflussverfolgung und Bereitstellen eines Projektplans als Ergebnis, der Entscheidungen darüber umfasst, welche Maschinen eingesetzt und wohin sie geschickt werden sollen, um die Produktivität der Maschinenflotte zu steigern, und
vorzugsweise Erzeugen von Befehlen basierend auf dem Projektplan und Übertragen der Befehle an jede der Maschinen.

7. Verfahren nach Anspruch 5 oder 6, wobei die erste Maschine (10) einen Lader umfasst und der erste Satz von Telematikdaten Folgendes umfasst:
• den Standort der Maschine;
• die von der Maschine ausgeführte Aktion, wie beispielsweise (a) Laden von Material in einen Transporter oder (b) Umschichten von Material an Ort und Stelle (z. B. Schaben, Aufschichten, Aufräumen);
• das Gewicht der Last, die von einer Schaufel angehoben wird;
• die Art des zu verarbeitenden Materials; und
• Zeitstempel, die mit jedem der vorstehenden Punkte verbunden sind.

8. Verfahren nach einem der Ansprüche 5 bis 7, wobei die zweite Maschine (12) einen Transporter umfasst und der zweite Satz von Telematikdaten Folgendes umfasst:
• den Standort der Maschine;
• die von der Maschine ausgeführte Aktion wie beispielsweise (a) der Transporter wird beladen, (b) der Transporter fährt beladen, wartet auf das Entladen, entlädt, fährt leer, wartet auf die Beladung oder ist außer Betrieb;
• das Gewicht der vom Transporter beförderten Ladung; und
• die Zeitstempel, die mit jedem der vorstehenden Punkte verbunden sind.

## Revendications

1. Système (105) de gestion d'un parc de machines fonctionnant dans un chantier de construction ou de génie civil, le système (105) comprenant une unité de commande et de traitement (46) configurée pour :
recevoir un premier ensemble de données télématiques provenant d'une première machine (10) ;
recevoir un second ensemble de données télématiques provenant d'une seconde machine (12) ; et
déterminer s'il existe une proximité positionnelle et temporelle entre les première et seconde machines (10, 12) sur la base au moins en partie d'une analyse des premier et second ensembles de données télématiques, dans lequel l'unité de commande et de traitement (46) est configurée pour recevoir les premier et second ensembles de données télématiques en recevant les données télématiques à intervalles réguliers de chacune des première et seconde machines (10, 12),
dans lequel l'unité de commande et de traitement (46) est configurée pour identifier la proximité positionnelle et temporelle entre les première et seconde machines (10, 12) lorsque la première machine (10) se trouve à une distance maximale prédéterminée de la seconde machine (12) pendant au moins une durée minimale prédéterminée, dans lequel la distance maximale est de préférence une distance configurable comprise entre 2 et 20 mètres et la durée minimale est de préférence une durée configurable comprise entre 30 secondes et 120 secondes, dans lequel, s'il est déterminé qu'il existe une proximité positionnelle et temporelle, l'unité de commande et de traitement (46) est configurée pour :
recevoir des données de cycle de travail de chacune des première et seconde machines (10, 12) ; et
corréler les données de cycle de travail de la première machine (10) avec les données de cycle de travail de la seconde machine (12), et s'il existe une corrélation dans les données de cycle de travail :
associer la première machine (10) à la seconde machine (12) ;
appliquer l'association pour prendre en charge la surveillance du transport de masse pour un parc de machines, le parc de machines comprenant au moins les première et seconde machines (10, 12) ;
recevoir des données de charge utile de chacune des première et seconde machines (10, 12) ;
corréler une première partie des données de charge utile de la première machine (10) avec une première partie des données de charge utile de la seconde machine (12) et dériver une seconde partie des données de charge utile de la seconde machine (12) à partir d'une seconde partie des données de charge utile de la première machine (10), dans lequel la première partie des données de charge utile comprend de préférence le poids et/ou la masse, et la seconde partie des données de charge utile comprend de préférence le type de matériau ; et
appliquer les résultats de la corrélation et de la dérivation de la charge utile pour suivre les quantités d'un matériau déplacé par les première et seconde machines (10, 12).

2. Système (105) selon la revendication 1, dans lequel l'unité de commande et de traitement (46) est configurée pour appliquer l'association en analysant les données d'association pour le parc de machines et le suivi des mouvements de matériaux, et en fournissant, en sortie, un plan de projet comprenant des décisions quant aux machines qui doivent être déployées et à l'endroit où elles doivent être envoyées, pour augmenter la productivité du parc de machines, et dans lequel l'unité de commande et de traitement (46) est de préférence configurée pour générer des commandes sur la base du plan de projet et transmettre les commandes à chacune des machines.

3. Système (105) selon l'une quelconque des revendications 1 ou 2, dans lequel la première machine (10) comprend un chargeur et le premier ensemble de données télématiques comprend :
• l'emplacement de la machine ;
• l'action effectuée par la machine, telle que (a) charger du matériel dans un transporteur, ou (b) réorganiser le matériel sur place (par exemple, gratter, empiler, nettoyer) ;
• le poids de la charge soulevée par un godet ;
• le type de matériau manipulé ; et
• les horodatages associés à chacun des éléments ci-dessus.

4. Système (105) selon l'une quelconque des revendications 1 à 3, dans lequel la seconde machine (12) comprend un transporteur et le second ensemble de données télématiques comprend :
• l'emplacement de la machine ;
• l'action effectuée par la machine, telle que (a) le transporteur est en cours de chargement, ou (b) le transporteur se déplace chargé, attend de décharger, se décharge, se déplace à vide, attend de charger et n'est pas en fonctionnement ;
• le poids de la charge transportée par le transporteur ; et
• les horodatages associés à chacun des éléments ci-dessus.

5. Procédé de gestion d'un parc de machines fonctionnant dans un projet de construction ou de génie civil, le procédé comprenant :
la réception d'un premier ensemble de données télématiques provenant d'une première machine (10) ;
la réception d'un second ensemble de données télématiques provenant d'une seconde machine (12) ; et
le fait de déterminer s'il existe une proximité positionnelle et temporelle entre les première et seconde machines (10, 12) sur la base au moins en partie d'une analyse des premier et second ensembles de données télématiques ; dans lequel la réception des premier et second ensembles de données télématiques comprend la réception de données télématiques à intervalles réguliers de chacune des première et seconde machines (10, 12) ;
dans lequel la proximité positionnelle et temporelle entre les première et seconde machines (10, 12) est identifiée lorsque la première machine (10) se trouve à une distance maximale prédéterminée de la seconde machine (12) pendant au moins une durée minimale prédéterminée, dans lequel la distance maximale est de préférence une distance configurable comprise entre 2 et 20 mètres et la durée minimale est de préférence une durée configurable comprise entre 30 secondes et 120 secondes ;
dans lequel, s'il est déterminé qu'il existe une proximité positionnelle et temporelle, le procédé comprend également :
la réception des données de cycle de travail de chacune des première et seconde machines (10, 12) ; et
la corrélation des données de cycle de travail de la première machine (10) avec les données de cycle de travail de la seconde machine (12), et s'il existe une corrélation dans les données de cycle de travail :
l'association de la première machine (10) à la seconde machine (12) ; et
l'application de l'association pour prendre en charge la surveillance du transport de masse pour le parc de machines, le parc de machines comprenant au moins les première et seconde machines (10, 12) ;
la réception de données de charge utile de chacune des première et seconde machines (10, 12) ;
la corrélation au moins d'une première partie des données de charge utile de la première machine (10) avec au moins une première partie des données de charge utile de la seconde machine (12), et la dérivation d'une seconde partie des données de charge utile de la seconde machine (12) à partir d'une seconde partie des données de charge utile de la première machine (10), dans lequel la première partie des données de charge utile comprend de préférence le poids et/ou la masse, et la seconde partie des données de charge utile comprend de préférence le type de matériau ; et
l'application des résultats de la corrélation et de la dérivation de la charge utile pour suivre le mouvement des quantités d'un matériau par les première et seconde machines (10, 12).

6. Procédé selon la revendication 5, dans lequel l'application de l'association comprend :
l'analyse des données d'association pour le parc de machines et le suivi des mouvements de matériel, et la fourniture, en sortie, d'un plan de projet comprenant des décisions quant aux machines qui doivent être déployées et à l'endroit où elles doivent être envoyées, pour augmenter la productivité du parc de machines, et
de préférence la génération des commandes basées sur le plan du projet et la transmission des commandes à chacune des machines.

7. Procédé selon l'une quelconque des revendications 5 ou 6, dans lequel la première machine (10) comprend un chargeur et le premier ensemble de données télématiques comprend :
• l'emplacement de la machine ;
• l'action effectuée par la machine, telle que (a) charger du matériel dans un transporteur, ou (b) réorganiser le matériel sur place (par exemple, gratter, empiler, nettoyer) ;
• le poids de la charge soulevée par un godet ;
• le type de matériau manipulé ; et
• les horodatages associés à chacun des éléments ci-dessus.

8. Procédé selon l'une quelconque des revendications 5 à 7, dans lequel la seconde machine (12) comprend un transporteur et le second ensemble de données télématiques comprend :
• l'emplacement de la machine ;
• l'action effectuée par la machine, telle que (a) le transporteur est en cours de chargement, ou (b) le transporteur se déplace chargé, attend de décharger, se décharge, se déplace à vide, attend de charger et n'est pas en fonctionnement ;
• le poids de la charge transportée par le transporteur ; et
• les horodatages associés à chacun des éléments ci-dessus.
